# EUROPÄISCHE PATENTSCHRIFT

(11) **EP 0 417 479 B1**
(45) Veröffentlichungstag und Bekanntmachung des Hinweises auf die Patenterteilung: **10.11.1993**
(21) Anmeldenummer: 90115327.0
(22) Anmeldetag: 09.08.1990
(51) Int. Cl.: F16B 39/24, F16B 43/00

(54) **Unterlegscheibe für Schrauben**
Washer for screws
Rondelle pour vis

(30) Priorität: 09.09.1989 DE 3930209
(43) Veröffentlichungstag der Anmeldung: 20.03.1991
(73) Patentinhaber: Koch, Hubert Josef, D-36088 Hünfeld (DE)
(72) Erfinder: Biedenbach,Marita, D-6418 Hünfeld (DE)
(74) Vertreter: Betten & Resch

(56) Entgegenhaltungen:
- DE-A- 2 157 124
- DE-A- 3 602 295
- DE-A- 3 715 204
- "SCHRAUBENSICHERUNG NORA-B" Februar 1975, Martin Merkel KG, Hamburg Publ.-Nr. VR 150 (2.75-2) 6

## Beschreibung

Die Erfindung betrifft die Verwendung einer ringartigen Unterlegscheibe für Holzschrauben u. dgl., eine ringartige Unterlegscheibe mit Schraube sowie eine Verbindung zwischen einer Holzschraube und Holz unter Verwendung einer speziellen Unterlegscheibe.

Es wird eine ringartige Unterlegscheibe für Schrauben, insbesondere für Holzschrauben, aber auch für Schrauben für Holzersatzmaterialien wie Spanplatten, Gipsplatten u. dgl. offenbart. In erster Linie bezieht sich die Erfindung auf eine Unterlegscheibe für Senkkopfschrauben, grundsätzlich ist sie jedoch auch für andere Schrauben wie Linsenschrauben, Halbrundkopfschrauben o. dgl. anwendbar. Der primäre Anwendungsbereich der hier in Rede stehenden Unterlegscheibe ist in Zusammenhang mit einer sog. Schnellbauschraube, das heißt einer meistens als Kreuzschlitzschraube ausgebildeten Senkkopfschraube, die ohne Vorbohren in die zu befestigenden Materialien eingeschraubt wird. Solche Schnellbauschrauben sind beispielsweise unter der Bezeichnung SPAX-Schrauben im Handel.

Bei der Befestigung von Bauelementen aus Holz wie beispielsweise Leisten o. dgl. ergibt sich oftmals das Problem, daß beim Eindrehen der Schraube in das Holz insbesondere dann, wenn sich die Schraube nahe dem Ende einer Latte o. dgl. befindet, aufgrund der Keilwirkung, welche der Senkkopf der Schraube beim Eindrehen der Senkkopfschraube auf das Holzmaterial ausübt, dieses reißt. Bei weicheren Hölzern ist darüber hinaus in der Praxis oftmals nicht vermeidbar, daß der Kopf der Senkkopfschraube je nach Kraftaufwand mittels Hand oder Elektroschraubendreher verschieden tief in das Holz eingedreht wird. Auch können verzogene Hölzer und Latten oftmals nicht verwendet werden, nachdem deren Spannung zu groß ist, um mittels der Schraube in die Soll-Position gezwungen zu werden; das Holz würde wiederum ausreißen, bzw. der Kopf würde zu tief in das Holzmaterial eindringen.

Aus dem Dokument "SCHRAUBENSICHERUNG NORA-B", Februar 1975, Martin Merkel KG, Hamburg, Publ.-Nr. VR 150 (2.75-2)6, ist eine Druckkapsel für Schraubenmuttern bekannt, in die ein Kautschukring eingelegt ist. Hierdurch soll ein selbsttätiges Lösen der Schraubenmuttern ohne Kontermuttern und Unterlegscheiben vermieden werden.

Die DE-A-21 57 124 betrifft einen Schraubstab mit Unterlagscheibe. Auf der glatten Unterlagscheibe ist ein Federring "wie aus einem Stück" befestigt. Die Anordnung dient zum Festspannen der Anschlußenden von Leitungsdrähten an elektrischen Einrichtungen.

Die DE-A-36 02 295 betrifft ein Verbindungselement für Kunststoffteile, welches Lockerungen bei Schraubverbindungen verhindern soll. Hierbei findet eine im Kunststoffteil durch Hochfrequenzschweißung verankerte Distanzscheibe Verwendung, die axial nach oben, d.h. zum Schraubenkopf hin vorstehende spitze Vorsprünge besitzt, auf denen der Schraubenkopf bzw. seine Unterlagscheibe aufliegt.

Der vorliegenden Erfindung liegt in erster Linie die Aufgabe zugrunde, das zu tiefe Eindringen einer Schraube in das Holz zu verhindern und das Reißen des Holzes beim Eindrehen der Schraube zu vermeiden. Auch sollte die Unterlegscheibe bei Verwendung in Zusammenhang mit einer Senkkopfschraube in eingeschraubtem Zustand der Schraube eine im wesentlichen plane Oberfläche des Holzes gewährleisten.

Diese Aufgabe wird im wesentlichen dadurch gelöst, daß eine ringartige Unterlegscheibe verwendet wird, bei der der äußere Randbereich nach unten, das heißt weg vom Schraubenkopf gerichtet ist. In vorteilhafter Weiterbildung der Erfindung weist die Scheibe einen in etwa halbkreisförmigen oder U-förmigen Querschnitt auf und der untere Rand des äußeren Randbereichs ist schneidenförmig ausgebildet.

Die erfindungsgemäß verwendete Unterlegscheibe wird entweder vor dem Einschrauben der Schraube am Befestigungspunkt in das Holz eingeschlagen und dann die Schraube in das Holz eingedreht, oder aber die Unterlegscheibe wird zusammen mit der Schraube durch Einschrauben der Schraube in die Holzoberfläche hineingetrieben. Die erfindungsgemäße Unterlegscheibe durchtrennt mit der unteren, vorzugsweise schneidenförmig ausgebildeten Unterkante des nach unten gerichteten Randbereichs die Holzfasern in diesem Bereich, und gleichzeitig wird das Material unter der Unterlegscheibe gestaucht und verdichtet.

Während im Falle des bekannten Standes der Technik die konische Unterseite der Senkkopfschraube beim Einschrauben des Senkkopfes in das Holzmaterial das Holz seitlich schräg wegdrückte und somit stets die Gefahr einer Spaltung bzw. eines Risses im Holzmaterial gegeben war, bewirkt die Verwendung der erfindungsgemäßen Unterlegscheibe, daß die Kräfte über die Unterlegscheibe auf das Holz übertragen werden und daher senkrecht zur Holzoberfläche, also parallel zur Schraube auf das Holz einwirken, wodurch die Keilwirkung der Senkkopfschraube entfällt und damit die Gefahr einer Spaltung oder eines Risses drastisch reduziert bzw. ausgeschaltet wird. Die über die Schraube aufgebrachte Befestigungskraft geht somit vollständig in Richtung der zu verbindenden Elemente, wodurch eine Befestigung höherer Güte erzielt wird. Die Verbindung ist daher höher belastbar und die Schraube sitzt und hält dauerhaft. Auch verzogene Hölzer können nunmehr sicher verschraubt werden, so daß man von der Qualität des verwendeten Holzes unabhängiger wird.

Aufgrund der Stauchung und Verdichtung der Holzfasern unterhalb der erfindungsgemäßen Unterlegscheibe ist nunmehr sichergestellt, daß auch Befestigungspunkte nahe dem Holzende nicht mehr einreißen.

Durch die gekrümmte Form der erfindungsgemäßen Unterlegscheibe erhält diese insgesamt eine hervorragende Festigkeit bzw. Stabilität, so daß die Scheibe auch unter Anwendung hoher Kräfte beim Eindringen in das Holz ihre ursprüngliche Form im wesentlichen beibehält.

Ein Aufbiegen des äußeren Randbereichs der erfindungsgemäßen Unterlegscheibe beim Eintreiben der Unterlegscheibe in das Holz ist praktisch ausgeschlossen.

Die erfindungsgemäße Unterlegscheibe schließt mit ihrer Oberseite im wesentlichen bündig mit der Holzoberfläche ab. Die Unterlegscheibe ist bezüglich der hiermit zu verwendenden Senkkopfschrauben so dimensioniert, daß die plane Oberseite des Kopfes der Senkkopfschraube mit der Oberseite der Unterlegscheibe ebenfalls im wesentlichen bündig abschließt. Die Holzoberfläche bleibt daher auch nach Aufbringen der Unterlegscheibe und Einschrauben der Schraube im wesentlichen plan.

Unter Verwendung der erfindungsgemäßen Unterlegscheibe kann die Schraube beliebig oft heraus- und hineingedreht werden, ohne daß die Unterlegscheibe ihre Lage verändert. Die Innenmaße bzw. die Innenform der erfindungsgemäßen Unterlegscheibe ist so gehalten, daß der Senkkopf innen eine Ideallage erhält, sich selbst zentriert und Senkkopfschrauben mit verschieden großen Kopfdurchmessern aufnehmen kann.

Aufgrund der deutlich verbesserten Haltekraft der bei Verwendung der erfindungsgemäßen Unterlegscheibe erzielbaren Verbindung kann die Anzahl der für eine bestimmte Verbindung erforderlichen Befestigungselemente, das heißt Schrauben mit Unterlegscheiben, deutlich reduziert werden. Hierdurch ist sowohl eine Material- als auch eine Arbeitseinsparung zu verzeichnen.

Im folgenden werden mehrere Ausführungsbeispiele der Erfindung anhand der Zeichnung näher dargestellt. In der Zeichnung zeigen:
Figur 1 eine Draufsicht auf eine erfindungsgemäße Unterlegscheibe,
Figur 2 einen Schnitt durch die Unterlegscheibe gemäß Figur 1 in Richtung der Pfeile II-II gemäß Figur 1 in vergrößerter Darstellung,
Figur 3 die Unterlegscheibe gemäß Figuren 1 und 2 in eingebautem Zustand, und
Figur 4 einen Schnitt durch ein weiteres Ausführungsbeispiel einer erfindungsgemäßen Unterlegscheibe.

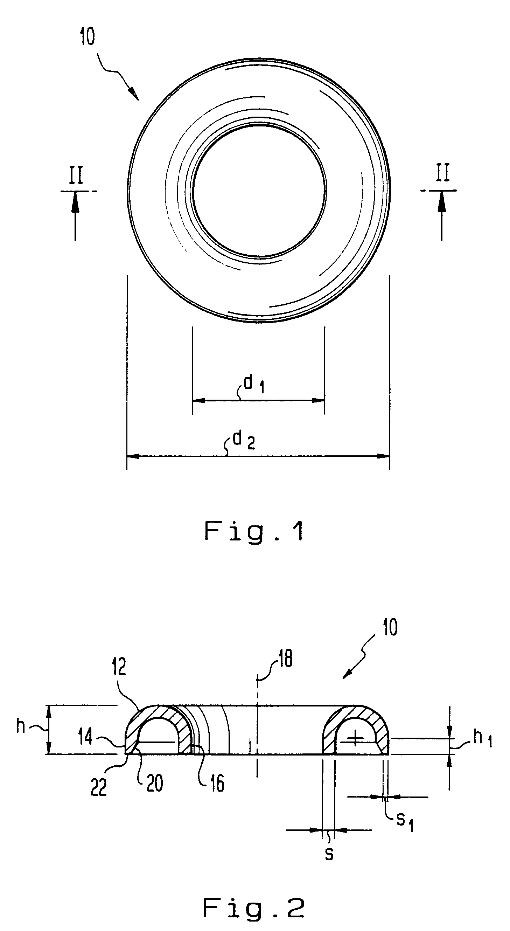

Die Unterlegscheibe gemäß Figuren 1 und 2 ist insgesamt mit der Bezugsziffer 10 bezeichnet. Die ringartige Unterlegscheibe 10 umfaßt einen mittleren Ringabschnitt 12, der im Querschnitt halbkreisförmig gekrümmt ist, sowie zwei sich an den beiden unteren Enden des mittleren Ringabschnitts 12 anschließende Endabschnitte 14, 16, die parallel bzw. konzentrisch zur Mittelachse 18 der Unterlegscheibe 10 ausgerichtet sind, wobei der innere Endabschnitt mit der Bezugsziffer 16 und der äußere Endabschnitt mit der Bezugsziffer 14 bezeichnet ist. Beide Endabschnitte 14 und 16 weisen im wesentlichen die gleiche Höhe, das heißt die gleiche Abmessung in Richtung der Mittelachse 18 gemessen auf.

Am äußeren Endabschnitt 14 ist an dessen innenliegender Kante eine Abschrägung 20 ausgebildet, die im Falle des vorliegenden Ausführungsbeispiels mit der Achse 18 einen Winkel von 30 Grad einnimmt. Diese Abschrägung 20 bewirkt, daß die äußere untere Endkante der Unterlegscheibe 10 als Schneide 22 wirkt.

Im Falle des dargestellten Ausführungsbeispiels ist der Außendurchmesser d₂ der Unterlegscheibe 16 mm, der Innendurchmesser d₁ 8 mm, die Höhe h 3 mm, die Höhe h₁ des äußeren und inneren Endabschnitts jeweils 1 mm, die Materialstärke s 0,75 mm und die Breite s₁ der Schneide 22 ungefähr 0,3 mm. Der Krümmungsradius des im Querschnitt halbkreisförmigen mittleren Ringabschnitts 12 beträgt 2 mm. Es versteht sich, daß die vorgenannten Dimensionen den jeweils verwendeten Schraubengrößen angepaßt werden müssen.

Allgemein kann festgestellt werden, daß der Außendurchmesser d₂ der Unterlegscheibe etwa das zweifache (± 20%) des Innendurchmessers d₁ betragen sollte, und daß die axiale Ausdehnung des Endabschnitts 14 bzw. 16 etwa das einviertelfache bis einfache, vorzugsweise etwa die Hälfte der axialen Ausdehnung des gekrümmten Ringabschnitts 12 betragen sollte.

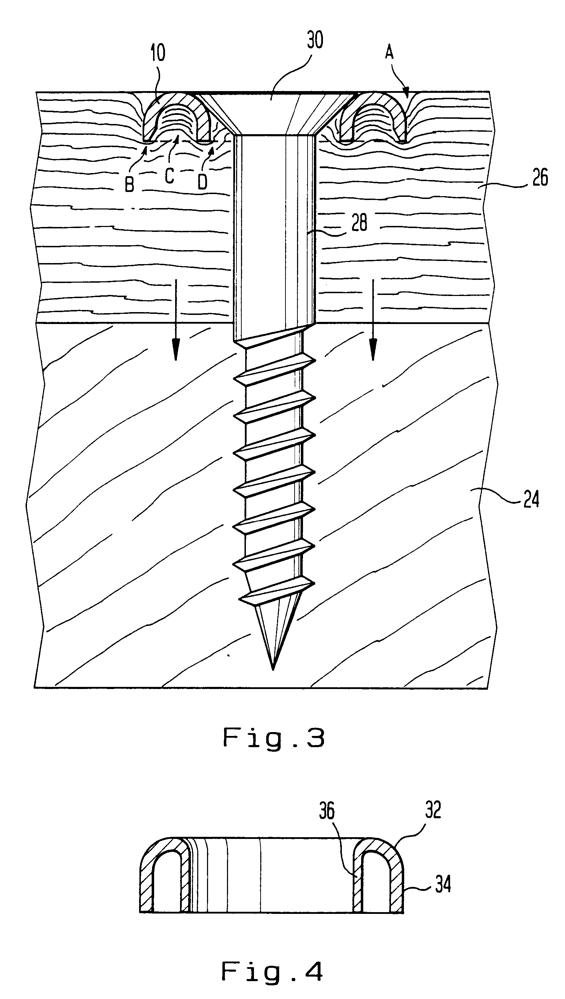

Es wird nunmehr auf Figur 3 Bezug genommen. Hier ist ein erstes Bauteil 24 aus Holz erkennbar, an welchem ein zweites Bauteil 26, beispielsweise eine Holzleiste, mittels einer Holzschraube 28 mit Senkkopf 30 und der Unterlegscheibe 10 gemäß Figuren 1 und 2 befestigt ist. Wie aus Figur 3 deutlich wird, ist die Unterlegscheibe 10 in das Holz des zweiten Bauteils 26 etwa so weit eingetrieben, daß die Oberseite der Unterlegscheibe 10 etwa bündig ist mit der Oberseite des zweiten Bauteils 26. Das Eintreiben der Unterlegscheibe kann dadurch erfolgt sein, daß die Unterlegscheibe 10 vor dem Eindrehen der Holzschraube 28 in der gewünschten Position in das Holz eingeschlagen worden ist; es ist jedoch auch möglich, die Unterlegscheibe 10 durch Eindrehen der Schraube 28 in die Holzoberfläche einzutreiben.

Die Schraube 28 stützt sich mit der konischen Unterseite ihres Senkkopfes 30 am innenliegenden Bereich des mittleren Ringabschnitts 12 der Unterlegscheibe ab, wobei die Oberseite des Senkkopfes 30 in etwa bündig mit der Oberseite der Unterlegscheibe 10 und somit in etwa bündig mit der Oberseite des zweiten Bauteils 26 ist.

Wie aus Figur 3 deutlich erkennbar wurden beim Eintreiben der Unterlegscheibe 10 in das zweite Bauteil 26 mittels der Schneide 22 am äußeren unteren Umfang der Unterlegscheibe 10 die Holzfasern an der Oberseite des zweiten Bauteils 26 im Bereich A durchtrennt, und gleichzeitig wurde das Holz unterhalb der Unterlegscheibe 10 in den Bereichen B, C und D gestaucht, komprimiert und verfestigt; dies wirkt einerseits einem unerwünschten Spalten des Holzes entgegen und verhindert andererseits ein weiteres Eintreiben der Unterlegscheibe 10 in das Holz selbst bei sehr hohen auftretenden Kräften. Wie man weiterhin aus Figur 3 erkennt, treten bei Verwendung der erfindungsgemäßen Unterlegscheibe keine Keilwirkungen durch den konischen Senkkopf 30 auf, vielmehr sind die Kräfte praktisch ausschließlich nach unten parallel zur Schraube 28 gerichtet.

In Figur 4 ist eine alternative Form einer erfindungsgemäßen Unterlegscheibe dargestellt. Hier ist der mittlere Ringabschnitt 32 im Querschnitt nicht exakt halbkreisförmig ausgebildet und der innere Endabschnitt 36 hat eine geringere Materialstärke als der äußere Endabschnitt 34.

Das Ausführungsbeispiel gemäß Figuren 1 bis 3 ist lediglich als bevorzugte Ausführungsform anzusehen. Dem Fachmann ist klar, daß zahlreiche Modifikationen möglich sind. Beispielsweise muß der äußere und innere Rand der Unterlegscheibe nicht auf gleicher Höhe enden. Anstelle einer halbkreisförmigen bzw. kreisbogenförmigen Krümmung sind selbstverständlich auch andere gekrümmte Formen denkbar, beispielsweise in Form eines U mit stärkeren Krümmungen an den Eckbereichen. Je nach verwendetem Material kann auf die Ausbildung einer Schneide 22 verzichtet werden, falls aufgrund der geringen Materialstärke auch ohne eine solche Schneide eine Schneidwirkung erzielt wird. Die Schneidwirkung erfolgt vorzugsweise durch den äußeren, nach unten gerichteten Randbereich, jedoch ist es auch denkbar, daß die Schneidwirkung durch den inneren, nach unten gerichteten Randbereich erzielt wird und in diesem Fall auf den äußeren, nach unten gerichteten Randbereich ganz oder doch zumindest teilweise verzichtet wird.

Die erfindungsgemäße Unterlegscheibe besteht vorzugsweise aus Metall wie beispielsweise Eisen, Stahl oder Messing. Sie kann verzinkt, verchromt oder vernickelt sein und bei Bedarf auch farbig ausgebildet sein. Aufgrund der Formgebung der Unterlegscheibe im inneren, der Mittelachse 18 zugewandten Bereich, insbesondere aufgrund der dortigen kreisbogenförmigen oder aber auch abgeschrägten Ausgestaltung, kann eine Größe einer Unterlagscheibe für mehrere Schraubengrößen passend sein.

Obwohl die erfindungsgemäße Unterlegscheibe in erster Linie für Senkkopfschrauben entwickelt worden ist, versteht es sich, daß auch in Zusammenhang mit anderen Schrauben zumindest ein Teil der geschilderten Vorteile erzielt werden kann.

## Patentansprüche

1. Verwendung einer ringartigen Unterlegscheibe (1), bei der der äußere Randbereich nach unten, d.h. weg vom Schraubenkopf (30) gerichtet ist, im Zusammenhang mit Holzschrauben sowie Schrauben für Holzersatzmaterialien.

2. Ringartige Unterlegscheibe mit Schraube,
dadurch gekennzeichnet,
daß der äußere Randbereich der Unterlegscheibe (10) nach unten, das heißt weg vom Schraubenkopf (30) gerichtet ist, und
daß der innere Randbereich der Unterlegscheibe (10) nach unten, das heißt weg vom Schraubenkopf (30) gerichtet ist.

3. Unterlegscheibe nach Anspruch 2,
dadurch gekennzeichnet,
daß sie in etwa einen halbkreisförmigen oder U-förmigen Querschnitt aufweist.

4. Unterlegscheibe nach Anspruch 2 oder 3 dadurch gekennzeichnet
daß sich an einen gekrümmten mittleren Ringabschnitt (12) ein äußerer, zur Achse (18) der Unterlegscheibe (10) konzentrischer Endabschnitt (14, 34) anschließt.

5. Unterlegscheibe nach Anspruch 4,
dadurch gekennzeichnet,
daß sich an den gekrümmten mittleren Ringabschnitt (12) ein innerer, zur Achse (18) der Unterlegscheibe (10) konzentrischer Endabschnitt (16, 36) anschließt.

6. Unterlegscheibe nach Anspruch 4 oder 5,
dadurch gekennzeichnet,
daß der gekrümmte mittlere Ringabschnitt (12) einen im wesentlichen halbkreisförmigen Querschnitt aufweist.

7. Unterlegscheibe nach einem der Ansprüche 2-6,
dadurch gekennzeichnet,
daß der untere Rand (22) des äußeren Randbereichs (14) schneidenförmig ausgebildet ist.

8. Unterlegscheibe nach Anspruch 7,
dadurch gekennzeichnet,
daß die Schneide (22) durch Abschrägung (20) des innenliegenden Endbereichs des äußeren Randbereichs gebildet ist.

9. Unterlegscheibe nach einem der Ansprüche 2-8,
dadurch gekennzeichnet,
daß der Außendurchmesser (d) der Unterlegscheibe (10) um den Faktor 2 (± 20%) größer ist als der Innendurchmesser (d₁) der Unterlegscheibe.

10. Unterlegscheibe nach Anspruch 4 oder 5,
dadurch gekennzeichnet,
daß die axiale Ausdehnung (h₁) des Endabschnitts (14, 16) das einviertelfache bis ein-fache, vorzugsweise etwa die Hälfte der axialen Ausdehnung des gekrümmten Ringabschnittes (12) beträgt.

11. Unterlegscheibe nach einem der Ansprüche 2-10,
dadurch gekennzeichnet,
daß der äußere Rand und der innere Rand im wesentlichen in der gleichen Ebene liegen.

12. Unterlegscheibe nach einem der Ansprüche 2-11,
dadurch gekennzeichnet,
daß sie aus Metall besteht.

13. Verwendung nach Anspruch 1, dadurch gekennzeichnet, daß die Unterlegscheibe (1) die kennzeichnenden Merkmale eines oder mehrerer der Ansprüche 2 bis 12 aufweist.

14. Verbindung zwischen einer Holzschraube und Holz,
dadurch gekennzeichnet,
daß ein umlaufender Randbereich (12, 14 bzw. 12, 16) einer ringartigen Unterlegscheibe (10) für die Holzschraube (28) nach unten, daß heißt weg vom Schraubenkopf (30) gerichtet ist, und unter Durchtrennung bzw. Stauchen der Holzfasern in die Holzoberfläche eingetrieben ist.

## Claims

1. Application for an annular washer (1) in which the outer edge region is directed downwards, i.e. away from the screw head (30), in conjunction with wood screws and screws for wood substitute materials.

2. Annular washer with screw, characterised in that the outer edge region of the washer (10) is directed downwards, i.e. away from the screw head (30) and that the inner edge region of the washer (10) is directed downwards, i.e. away from the screw head (30).

3. Washer according to claim 2, characterised in that it is approximately semicircular or U-shaped in cross-section.

4. Washer according to claim 2 or 3, characterised in that an outer end section (14, 34), which is concentric with the axis (18) of the washer (10), is connected to a curved middle annular section (12).

5. Washer according to claim 4, characterised in that an inner end section (16, 36), which is concentric with the axis (18) of the washer (10), is connected to a curved middle annular section (12).

6. Washer according to claim 4 or 5, characterised in that the curved middle annular section (12) is substantially semicircular in cross-section.

7. Washer according to one of claims 2 to 6, characterised in that the lower edge (22) of the outer edge region (14) is of knife-shaped design.

8. Washer according to claim 7, characterised in that the knife-edge (22) is formed by bevelling (20) the internal end region of the outer edge region.

9. Washer according to one of claims 2 to 8, characterised in that the external diameter (d) of the washer (10) is larger than the internal diameter (d₁) of the washer by a factor of 2 (± 20%).

10. Washer according to claim 4 or 5, characterised in that the axial dimension (h₁) of the end section (14, 16) is one quarter to one times, preferentially approximately half, the axial dimension of the curved annular section (12).

11. Washer according to one of claims 2 to 10, characterised in that the outer edge and the inner edge lie substantially in the same plane.

12. Washer according to one of claims 2 to 11, characterised in that it is made of metal.

13. Application according to claim 1, characterised in that the washer (1) has the characterising features of one or more of claims 2 to 12.

14. Connection between a wood screw and wood, characterised in that a circumferential edge area (12, 14 or 12, 16) of an annular washer (10) for the wood screw (28) is directed downwards, i.e. away from the screw head (30), and is driven into the surface of the wood by severing or compressing the wood fibres.

## Revendications

1. Utilisation d'une rondelle annulaire (1), dont la zone marginale extérieure est orientée vers le bas, c'est-à-dire en s'écartant de la tête de vis (30), en liaison avec des vis à bois, ainsi que des vis pour des matériaux de substitution au bois.

2. Rondelle annulaire avec vis, caractérisée en ce que la zone marginale extérieure de la rondelle (10) est orientée vers le bas, c'est-à-dire en s'écartant de la tête de vis (30), et en ce que la zone marginale intérieure de la rondelle (10) est orientée vers le bas, c'est-à-dire en s'écartant de la tête de vis (30).

3. Rondelle annulaire selon la revendication 2, caractérisée en ce qu'elle présente une section transversale à peu près en demi-cercle ou en U.

4. Rondelle annulaire selon la revendication 2 ou 3, caractérisée en ce qu'une section d'extrémité (14, 34) extérieure, concentrique par rapport à l'axe (18) de la rondelle (10), se raccorde à une section annulaire médiane (12) incurvée.

5. Rondelle annulaire selon la revendication 4, caractérisée en ce qu'une section d'extrémité (16, 36) intérieure, concentrique par rapport à l'axe (18) de la rondelle (10), se raccorde à la section annulaire médiane (12) incurvée.

6. Rondelle annulaire selon la revendication 4 ou 5, caractérisée en ce que la section annulaire médiane (12) incurvée présente une section transversale sensiblement en forme de demi-cercle.

7. Rondelle annulaire selon l'une des revendications 2 à 6, caractérisée en ce que la bordure inférieure (22) de la zone marginale extérieure (14) est réalisée à la façon d'un tranchant de lame.

8. Rondelle annulaire selon la revendication 7, caractérisée en ce que le tranchant (22) est formé par un biseautage (20) de la zone d'extrémité intérieure de la zone marginale extérieure.

9. Rondelle annulaire selon l'une des revendications 2 à 8, caractérisée en ce que le diamètre extérieur (d) de la rondelle (10) est plus grand du facteur 2 (± 20 %) que le diamètre intérieur (d₁) de la rondelle.

10. Rondelle annulaire selon la revendication 4 ou 5, caractérisée en ce que la dimension axiale (h₁) de la section d'extrémité (14, 16) est de un quart à une fois, de préférence à peu près de la moitié, de la dimension axiale de la section annulaire (12) incurvée.

11. Rondelle annulaire selon l'une des revendications 2 à 10, caractérisée en ce que le bord extérieur et le bord intérieur sont situés sensiblement dans le même plan.

12. Rondelle annulaire selon l'une des revendications 2 à 11, caractérisée en ce qu'elle est en métal.

13. Utilisation selon la revendication 1, caractérisée en ce que la rondelle (1) présente les propriétés caractéristiques de l'une ou de plusieurs des revendications 2 à 12.

14. Liaison entre une vis à bois et du bois, caractérisée en ce qu'une zone marginale ciriculaire (12, 14 respectivement 12, 16) d'une rondelle annulaire (10) pour la vis à bois (28) est orientée vers le bas, c'est-à-dire en s'écartant de la tête de vis (30), et est enfoncée dans la surface du bois, en produisant une coupure ou un écrasement des fibres du bois.
